Europäisches Patentamt

European Patent Office

Office européen des brevets

(11) Veröffentlichungsnummer: **0 026 262**
**B1**

# EUROPÄISCHE PATENTSCHRIFT

(45) Veröffentlichungstag der Patentschrift:
28.03.84

(51) Int. Cl.³: **C 04 B 13/21**, C 04 B 31/02

(21) Anmeldenummer: **80103454.7**

(22) Anmeldetag: **20.06.80**

(54) Leichtbetonmischung.

(30) Priorität: 21.09.79 DE 2938338

(43) Veröffentlichungstag der Anmeldung:
08.04.81 Patentblatt 81/14

(45) Bekanntmachung des Hinweises auf die Patenterteilung:
28.03.84 Patentblatt 84/13

(84) Benannte Vertragsstaaten:
AT BE CH DE FR IT LI LU NL SE

(56) Entgegenhaltungen:
EP - A - 0 010 777
DE - A - 2 708 004
DE - A - 2 720 037
DE - A - 2 756 499
DE - B - 2 558 972
US - A - 3 890 157
US - A - 4 088 804

(73) Patentinhaber: Giulini Chemie GmbH, Giulinistrasse 2,
D-6700 Ludwigshafen/Rhein (DE)

(72) Erfinder: Urmann, Ernst, Dr, Dipl.-Chem, Limesstrasse 3,
D-6700 Ludwigshafen (DE)
Erfinder: Leschhorn, Frithjof, Dr, Dipl.-Chem,
Nelkenweg 31, D-6720 Speyer/Rhein (DE)
Erfinder: Hungerbühler, Kurt, Kestenberger Weg 29,
D-6707 Schifferstadt (DE)
Erfinder: Roth, Hans-Joachim, Zwerchstrasse 11,
D-7520 Bruchsal (DE)

(74) Vertreter: Benatzky, Erika, Dr. et al, Giulinistrasse 2,
D-6700 Ludwigshafen/Rh. (DE)

## Leichtbetonmischung

Gegenstand der vorliegenden Erfindung ist eine Leichtbetonmischung mit verbesserten Eigenschaften auf Basis von zementgebundenen leichten Zuschlagstoffen sowie ein Verfahren zur Herstellung dieser Mischung.

Leichtbetone mit zementgebundenen leichten Zuschlagstoffen sind seit langem bekannt. Sowohl bei haufwerksporigem Beton als auch bei Sieblinienbeton werden jedoch die Wärmeleitwerte — insbesondere bei Berücksichtigung der heutigen Energielage — als zu hoch bezeichnet und als dringend verbesserungsbedürftig angesehen. So entsprechen z.B. die aus der DE-A 2 624 950 bekannten Leichtbetone hinsichtlich ihres Wärmedämmwertes häufig noch nicht den heute an sie gestellten Anforderungen, so dass die Aufgabe, Leichtbetone zu finden, deren Wärmeleitwerte ohne Beeinträchtigung der übrigen Betoneigenschaften, insbesondere der Druckfestigkeit, extrem niedrig liegen, als ungelöst bezeichnet werden muss.

Für Baustoffe wie Zement, Mörtel und Beton sind auch bereits eine Anzahl von Zusatzstoffen mit gezielter Wirkung vorgeschlagen worden, z.B. Mittel zur Steigerung der Festigkeit oder Mittel zur Beschleunigung der Härtung und/oder Abbindung. So wird in der DE-B 1 286 950 eine Betonmischung beschrieben, die, bezogen auf das Gewicht des Zements, 5 bis 15 Gew.-% Aluminiumsulfat als Beschleuniger enthält. Nach Spalte 2, Zeilen 32-38, werden allerdings Dichte, Wärme- und Schallisolierfähigkeit durch den Zusatz nicht nicht verbessert. Es besteht im Gegenteil die Gefahr, dass durch das beschleunigte Verfahren die Festigkeit beeinträchtigt und das Schwinden erhöht wird, die Betoneigenschaften also negativ beeinflusst werden. Ausserdem können durch den Aluminiumsulfatgehalt Korrosionserscheinungen hervorgerufen werden.

Überraschenderweise wurde nunmehr gefunden, dass die gestellte Aufgabe mit einer Leichtbetonmischung auf Basis von zementgebundenen leichten Zuschlagstoffen dann gelöst werden kann, wenn die Mischung feinteiliges, röntgenamorphes Aluminiumhydroxid mit einem $d_{50}$-Wert kleiner als 6 $\mu m$ und einem $Al_2O_3$-Gehalt von 40 bis 65 Gew.-% und/oder kristallines Aluminiumhydroxid mit einem mittleren Korndurchmesser von 0,2 bis 2 $\mu m$ enthält. Erfindungsgemäss wird das Aluminiumhydroxid der Leichtbetonmischung in Mengen von 0,1 bis 10 Gew.-%, bezogen auf Zement, zugegeben.

Feinteilige röntgenamorphe Aluminiumhydroxide sind wie die feinteiligen kristallinen Aluminiumhydroxide seit langem im Handel; sie sind z.B. unter dem Namen ALUGEL® A 211 bzw. GILUDRAL® BZ erhältlich und werden nach bekannten Verfahren hergestellt. Mit Vorteil werden die röntgenamorphen Aluminiumhydroxide nach dem Verfahren der DE-C 1 921 999 hergestellt und die kristallinen, Hydrargillitstruktur aufweisenden Aluminiumhydroxide durch Auskristallisation aus Natriumaluminatlösung in Gegenwart von Impfkristallen. Der $Al_2O_3$-Gehalt der röntgenamorphen Aluminiumhydroxide liegt zwischen 40 und 65 Gew.-% und der $Al_2O_3$-Gehalt des kristallinen plättchenförmigen Hydroxids bei 65 Gew.-%, wobei geringe Abweichungen nach oben und unten nicht ausgeschlossen sind.

Unter feinteiligen röntgenamorphen Aluminiumhydroxiden werden hier vor allem «Gel-Teilchen» von kolloidaler Grössenordnung verstanden, die sich zu lockeren Agglomeratverbänden zusammenlagern, deren $d_{50}$-Wert kleiner als 6 $\mu m$ ist, insbesondere zwischen 4,8 und 5,4 $\mu m$, liegt. Die spezifische Oberfläche dieser Teilchen liegt zwischen 50 und 60 $m^2/g$.

Der mittlere Korndurchmesser liegt beim kristallinen Aluminiumhydroxid zwischen 0,2 bis 2 $\mu m$.

Wie bereits erwähnt, ist Ziel der Erfindung, mittels den vorstehenden neuen Mischungen Leichtbetone mit extrem niedrigen Wärmeleitwerten bei gleichzeitig hohen Druckfestigkeiten zu entwickeln und damit zur Schaffung der aus energietechnischen Gründen so nötig gebrauchten Wärmedämmstoffe beizutragen.

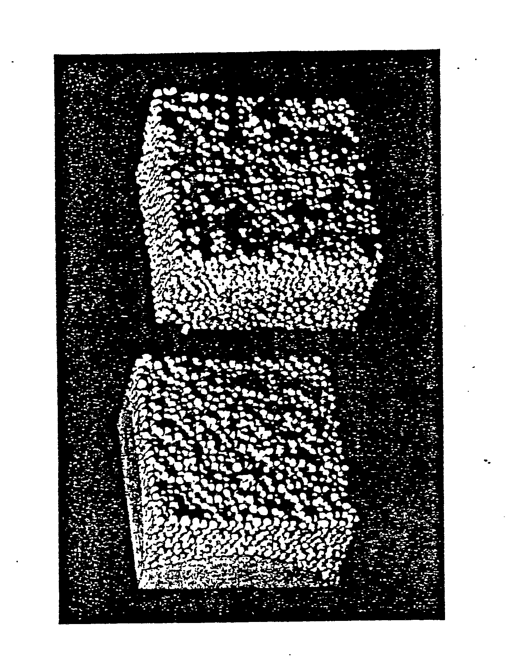

Während nun das amorphe Aluminiumhydroxid bei Zusätzen von max. bis 5 Gew.-%, bezogen auf den Zementanteil, vor allem als Erstarrungsbeschleuniger und viskositätssteigernd wirkt, verhindert das kristalline Aluminiumhydroxid, vor allem im Gemisch mit dem röntgenamorphen Aluminiumhydroxid, die Entmischung in den verflüssigten Leichtbetonen und führt zu höheren Standfestigkeiten. Mittelbar werden durch beide auch höhere mechanische Endfestigkeiten erreicht. Selbst bei extrem haufwerksporigen Leichtbetonen und Betonverflüssigerzusatz, etwa bei Zusatz eines Kondensationsproduktes aus Melamin und Formaldehyd, wurde eine Entmischung der Leichtbetonbestandteile nicht beobachtet. Bild 1 zeigt einen erfindungsgemäss hergestellten Leichtbeton aus Schaumpolystyrolperlen, Portlandzement PF 45 F und kristallinem Aluminiumhydroxid, Bild 2 einen Leichtbeton der ohne Zusatz von Aluminiumhydroxid erzeugt worden ist. Die mit Hilfe des erfindungsgemässen Zusatzes erzielte Verbesserung (Nichtentmischung) ist deutlich sichtbar.

Der Zusatz von amorphem Aluminiumhydroxid in Mengen von 0,1 bis 5 Gew.-%, bezogen auf das Gewicht des Zements, wirkt, wie entsprechende Untersuchungen gezeigt haben, als «latentes» Bindemittel, und trägt zur Erhöhung der mechanischen Festigkeitswerte bei. Überraschenderweise kann der sonst zur Erzielung der gewünschten Festigkeit erforderliche Zementanteil um bis zu 20 Gew.-% gesenkt werden, ohne dass es zu einer Verschlechterung der Festigkeitswerte kommt.

Wird der Aluminiumhydroxidzusatz in dem erfindungsgemässen Mengenbereich jedoch auf Werte > 5 Gew.-% angehoben, insbesondere 8 bis 10 Gew.-%, so werden die Viskosität und Benetzungsfähigkeit des Leichtbetons so erhöht, dass auch bei grobkörnigen Leichtzuschlägen dichtere Leichtbetone mit grossflächigen Bindungen und damit erhöhter mechanischer Festigkeit entstehen; selbst bei grobkörnigen Leichtzuschlägen bewirkt der Aluminiumhydroxidzusatz eine bisher nicht erzielte Frühfestigkeit, und zwar ohne dass es dabei zu einer Beschleunigung der Erhärtung und damit zu einem schädlichen Temperaturanstieg im Beton kommt. Bekanntlich führen Abbindebeschleuniger ähnlich wie Schnellzemente zu unerwünschten Temperaturerhöhungen, die zu Zerstörungen des Zementgefüges führen können und daher in Massenbeton nicht einsetzbar sind. Werden jedoch die Aluminiumhydroxide in den angegebenen Mengen (0,1 bis 10 Gew.-%) zu Portlandzementen, z.B. PZ 35 - 45 F, gegeben, ist an bis zum Kern eingeführten Messsonden eine über das normale Mass hinausgehende Temperaturerhöhung nicht feststellbar.

Anhand der beiliegenden Tabelle wird nun die Einwirkung von kristallinem Al-Hydroxid auf die Standfestigkeit (Grünstandsfestigkeit) von Prüfkörpern dargestellt. Die Abmessungen betrugen 5/99/24 cm. Nach vertikalem Abziehen der geölten Stahltafel 99/24 cm, welche die Vorderseite der Form darstellt, wurde die Homogenität und Formstabilität beurteilt.

Aufgrund des sehr unterschiedlichen Kornaufbaues der natürlichen Bimsvorkommen ist eine solche Zusammensetzung gewählt worden, deren Würfeldruckfestigkeit 2,5 MN/mm$^2$ (25 kp/cm$^2$) entspricht. Die gewählten Wandbauplatten entsprechen DIN 18 162. Die Zusammensetzung der Leichtbetone ist volumetrisch (1) angegeben.

| dtsch. Bims rechtsrheinisch | 10,0 | | 10,0 | | 10,0 | |
| --- | --- | --- | --- | --- | --- | --- |
| griech. Bims | | 10,0 | | 10,0 | | 10,0 |
| PZ 35/45 F | 1,4 | 1,3 | 1,2 | 1,1 | 1,1 | 0,9 |
| Al-Hydroxid kristallin | — | — | 0,05 | 0,05 | 0,20 | 0,20 |
| Anmachwasser | 2,6 | 2,3 | 2,7 | 2,35 | 2,9 | 3,1 |
| gezogen nach | 90' | 102' | 25' | 31' | 5' | 6' |

Es konnte bei Zusatz von Aluminiumhydroxid keine Verformung oder Inhomogenität, sowie kein «Bluten» des Betons festgestellt werden. Dass durch Zusatz von Aluminiumhydroxid zu den Bestandteilen des Leichtbetons (Zement und Leichtzuschlagstoffe) die Eigenschaften des Betons derart verbessert werden können, muss als überraschend angesehen werden. Dabei muss an dieser Stelle hervorgehoben werden, dass die Wirkung der erfindungsgemäss eingesetzten Aluminiumhydroxide von der Menge und der Aluminiumhydroxidmodifikation abhängig ist. Es kann zweckmässig sein, die beiden Modifikationen auch als Mischung einzusetzen, 60 - 40 Gew.-% röntgenamorphes und 40 - 60 Gew.-% kristallines Aluminiumhydroxid. Besonders bewährt haben sich Mischungen mit einem Mischungsverhältnis 45 : 55 bis 55 : 45.

Nach einer besonders günstigen Ausführungsweise der vorliegenden Erfindung werden als leichte Zuschlagstoffe geschäumte Kunststoffperlen, insbesondere Schaumpolystyrolkugeln eingesetzt. Eine derart bevorzugte Betonmischung kann z.B. folgende Zusammensetzungen haben:

Schaumpolystyrolperlen

| | | |
| --- | --- | --- |
| 10 mm ⌀ | 5,000 RT } | 80 Vol.% |
| 3 mm ⌀ | 3,000 RT } | |
| dtsch. Bims 0/1,5 mm | 2,000 RT } | |
| Portlandzement PZ 45 F | 1,200 RT } | 20 Vol.% |
| Al.-Hydroxid (krist.) | 0,200 RT } | |
| | (RT = Raumteile) | |

Nach 1/2 stündiger Vorquellung werden noch zugegeben:

| | |
| --- | --- |
| Celluloseäther 30.000 n.Brookfield | 0,010 |
| Melamin-Formaldehyd-Kondensat.produkt. | 0,010 |
| Kalkhydrat | 0,005 |

Überraschenderweise wird bei dieser Mischung weder eine Entmischung durch «Aufschwimmen» der mit 8 g/l extrem leichten Polystyrolperlen beobachtet, noch wird eine hohe Wärmeleitzahl gemessen.

Die organischen konsistenzbeeinflussenden Zusätze werden erfindungsgemäss in solchen Gewichtsmengen eingesetzt, dass das Gewichtsverhältnis Aluminiumhydroxid zu organischer Substanz zwischen 50 : 1 und 5 : 1 liegt, vorzugsweise zwischen 9 : 1 und 11 : 1. Die organischen Substanzen können quellfähige, hochviskose Verdickungsmittel sein wie wasserlösliche Zelluloseäther u. a. Methylhydroxyäthylzellulosen, Hydroxyäthylzellulosen und Na-Carboxymethylzellulosen haben sich in den Ausführungsbeispielen sowie in den praktischen Versuchen ausgezeichnet bewährt. Durch die gleichzeitige Verwendung der organischen Substanzen, insbes. Quellmittel, wird die durch das Aluminiumhydroxid bewirkte Erstarrungsbeschleunigung zusätzlich erhöht, so dass der Leichtbeton noch früher ausgeschalt werden kann.

Wie sich weiterhin gezeigt hat, können die wasserlöslichen Zelluloseäther in die erfindungsgemässen Betonmischungen auch zur Erhöhung des Wasserrückhaltevermögens eingesetzt werden. Von dieser Funktion wird man insbesondere dann Gebrauch machen, wenn grob- und dünngliedrige Leichtbetonelemente unmittelbar nach der Entschalung der Sonne und dem Wind ausgesetzt werden und ein «Verdursten» des Zementleimes an der Oberfläche befürchtet werden muss. Da für den Aushärtungsprozess neben der Wasserrückhaltung ausserdem eine kontinuierliche Wasserabgabe erforderlich ist, ist es zweckmässig, den Komponenten des Leichtbetons weitere, nicht quellfähige, jedoch zur Steuerung der Wasserabgabe geeignete Zusatzstoffe zuzusetzen.

Überraschenderweise sind hierfür die erfindungsgemäss eingesetzten Aluminiumhydroxide geeignet, so dass in Verbindung mit üblichen Wasserrückhaltern eine kontinuierliche Wasserabgabe stattfindet und der Hydratationsvorgang gleichmässig abläuft. Die zwischen den Aluminiumhydroxidteilchen sitzenden Wassermengen werden während des Hydratationsprozesses gleichmässig im Leichtbeton-Element abgegeben, so dass weder ein zu starkes Verdunsten an der Oberfläche stattfindet noch Spannungsrisse infolge eines unterschiedlichen Erstarrungs- und/oder Abbindeprozesses im Element auftreten.

Die Herstellung des erfindungsgemässen Leichtbetons wird durch die nachstehenden Rezepturen erläutert.

Beispiel für einen Leichtbeton mit extrem grobem leichten Zuschlagstoff

1. Blähtonperlen 10 mm      10,000 l
   Portlandzement PZ 35/45 F      1,300 l
   Al-Hydroxid (krist.)      0,100 l
   Anmachwasser

Beispiel für einen Leichtbeton mit Zuschlagstoff Bims

2. Bims 0,2 - 10 mm      10,000 l
   Portlandzement PZ 35/45 F      1,500 l
   Al-Hydroxid (krist.)      0,050 l
   Methylzellulosepulver MC 30.000      0,005 l
   Anmachwasser

Beispiel für einen Leichtbeton mit Zuschlagstoff Perlite

3. Perlite 0,2 - 3 mm      10,000 l
   Portlandzement PZ 35/45 F      1,100 l
   Al-Hydroxid (krist.)      0,050 l
   Methylzellulosepulver MC 30.000      0,010 l
   Verflüssiger      0,020 l

Beispiel für einen extrem leichten Beton mit den Zuschlagstoffen Bims- und Schaumpolystyrolperlen

4. Schaumpolystyrolperlen 10 mm ⌀
   (Einkorn)      6,000 l
   Bims 0,2 - 3,0 mm      6,000 l
   PZ 35/45 F      1,500 l
   Al-Hydroxid (krist.)      0,200 l
   hochviskose Methylzellulose      0,010 l
   Verflüssiger      0,010 l
   Anmachwasser

## Patentansprüche

1. Leichtbetonmischung auf Basis von zementgebundenen leichten Zuschlagstoffen, dadurch gekennzeichnet, dass sie feinteiliges, röntgenamorphes Aluminiumhydroxid mit einem $d_{50}$-Wert kleiner als 6 $\mu$m und einem $Al_2O_3$-Gehalt von 40 bis 65 Gew.-% und/oder kristallines Aluminiumhydroxid mit einem mittleren Korndurchmesser von 0,2 bis 2 $\mu$m in Mengen von 0,1 bis 10 Gew.-%, bezogen auf Zement, enthält.

2. Leichtbetonmischung nach Anspruch 1, dadurch gekennzeichnet, dass sie eine Mischung, bestehend aus 60 bis 40 Gew.-% röntgenamorphem Aluminiumhydroxid und 40 bis 60 Gew.-% kristallinem Aluminiumhydroxid, enthält.

3. Leichtbetonmischung nach den Ansprüchen 1 und 2, dadurch gekennzeichnet, dass das kristalline Aluminiumhydroxid einen $Al_2O_3$-Gehalt von 65 Gew.-% aufweist.

4. Leichtbetonmischung nach den Ansprüchen 1 bis 3, dadurch gekennzeichnet, dass sie ein hochviskoses organisches Quellmittel hoher Wasseraufnahmefähigkeit enthält, insbesondere einen wasserlöslichen Zelluloseäther.

5. Leichtbetonmischung nach den Ansprüchen 1 bis 4, dadurch gekennzeichnet, dass sie einen Betonverflüssiger enthält, insbesondere ein Kondensationsprodukt aus Melamin und Formaldehyd.

6. Verfahren zur Herstellung einer Leichtbetonmischung mit verbesserten Eigenschaften, insbesondere mit verringerten Wärmeleitwerten, auf Basis von zementgebundenen leichten Zuschlagstoffen, dadurch gekennzeichnet, dass man den Bestandteilen des Leichtbetons feinteiliges, röntgenamorphes Aluminiumhydroxid mit einem $d_{50}$-Wert kleiner als 6 $\mu$m und einem $Al_2O_3$-Gehalt von 40 bis 65 Gew.-% und/oder kristallines Aluminiumhydroxid mit einem mittleren Korndurchmesser von 0,2 bis 2 $\mu$m in Mengen von 0,1 bis 10 Gew.-%, bezogen auf Zement, zugibt.

7. Verfahren nach Anspruch 6, dadurch gekennzeichnet, dass man das feinteilige röntgenamorphe und/oder kristalline Aluminiumhydroxid mit organischen, konsistenzbeeinflussenden Zusätzen kombiniert und in solchen Mengen einsetzt, dass das Gew.-Verhältnis Aluminiumhydroxid zu organischer Substanz zwischen 50 : 1 und 5 : 1 liegt, vorzugsweise zwischen 9 : 1 und 11 : 1.

8. Verfahren nach den Ansprüchen 6 und 7, dadurch gekennzeichnet, dass man den Bestandteilen des Leichtbetons geschäumte Kunststoffperlen zusetzt.

## Revendications

1. Mélange de béton léger à base d'agrégats ou granulats légers lié par du ciment, caractérisé en ce qu'il contient de l'hydroxyde d'aluminium finement divisé, amorphe aux rayons X, dont la valeur $d_{50}$ est inférieure à 6 $\mu$ et dont la teneur en $Al_2O_3$ est de 40 à 65% en poids et/ou de l'hydroxyde d'aluminium cristallin dont les granules ont un diamètre moyen de 0,2 à 2 $\mu$ en quantité de 0,1 à 10% en poids par rapport au ciment.

2. Mélange de béton léger suivant la revendication 1, caractérisé en ce qu'il contient un mélange constitué de 60 à 40% en poids d'hydroxyde d'aluminium amorphe aux rayons X et 40 à 60% en poids d'hydroxyde d'aluminium cristallin.

3. Mélange de béton léger suivant les revendications 1 et 2, caractérisé en ce que l'hydroxyde d'aluminium cristallin présente une teneur en $Al_2O_3$ de 65% en poids.

4. Mélange de béton léger suivant les revendications 1 à 3, caractérisé en ce qu'il contient un agent de gonflement organique de viscosité élevée à grande capacité d'absorption d'eau, en particulier un éther de cellulose soluble dans l'eau.

5. Mélange de béton léger suivant les revendications 1 à 4, caractérisé en ce qu'il contient un agent plastifiant pour le béton en particulier un produit de condensation de mélamine et de formaldéhyde.

6. Procédé de préparation d'un mélange de béton léger aux propriétés améliorées, en particulier de conductibilité thermique réduite, à base d'agrégats ou granulats légers liés par du ciment, caractérisé en ce qu'on ajoute aux constituants du béton léger de l'hydroxyde d'aluminium finement divisé amorphe aux rayons X présentant une valeur d₅₀ inférieure à 6 µ et une teneur en $Al_2O_3$ de 40 à 65% en poids et/ou de l'hydroxyde d'aluminium cristallin dont les granules ont un diamètre moyen de 0,2 à 2 µ en quantité de 0,1 à 10% en poids par rapport au ciment.

7. Procédé suivant la revendication 6, caractérisé en ce qu'on effectue la combinaison de l'hydroxyde d'aluminium finement divisé cristallin et/ou amorphe aux rayons X avec des additifs organiques influençant la consistance et on les met en oeuvre en quantité telle que le rapport pondéral entre l'hydroxyde d'aluminium et la substance organique est compris entre 50 : 1 et 5 : 1, de préférence entre 9 : 1 et 11 : 1.

8. Procédé suivant les revendications 6 et 7, caractérisé en ce qu'on ajoute des perles de matière synthétique expansée aux constituants du béton léger.

## Claims

1. Light-weight concrete mixture on a basis of cement-bound light-weight aggregate materials, characterised in that it contains finely particulate aluminium hydroxyde amorphous to X-rays with a d₅₀ value less than 6 µm and an $Al_2O_3$ content of 40 to 65% by weight and/or crystalline aluminium hydroxyde with a mean grain diameter of 0.2 to 2 µm in quantities of 0.1 to 10% by weight in relation to the cement.

2. Light-weight concrete mixture according to claim 1, characterised in that it contains a mixture consisting of 60 to 40% by weight of aluminium hydroxyde amorphous to X-rays and 40 to 60% by weight of crystalline aluminium hydroxyde.

3. Light-weight concrete mixture according to claims 1 and 2, characterised in that the crystalline aluminium hydroxyde has an $Al_2O_3$ content of 65% by weight.

4. Light-weight concrete mixture according to claims 1 to 3, characterised in that it contains a high-viscosity organic swelling agent of high water-absorbing capacity, especially a water-soluble cellulose ether.

5. Light-weight concrete mixture according to claims 1 to 4, characterised in that it contains a concrete liquefier, especially a condensation product of melamine and formaldehyde.

6. Process for preparing a light-weight concrete mixture with improved properties, especially with reduced heat conduction values, on a basis of cement-bound light-weight aggregate materials, characterised in that finely particulate aluminium hydroxyde amorphous to X-rays with a d₅₀ value of less than 6 µm and an $Al_2O_3$ content of 40 to 65% by weight and/or crystalline aluminium hydroxyde with a mean grain diameter of 0.2 to 2 µm are added, in quantities of 0.1 to 10% by weight in relation to the cement, to the constituents of the light-weight concrete.

7. Process according to claim 6, characterised in that the finely particulate aluminium hydroxyde amorphous to X-rays and/or the crystalline aluminium hydroxyde are combined with organic additives influencing the consistency and are used in such quantities that the weight ratio of aluminium hydroxyde to organic substance is between 50 : 1 and 5 : 1, preferably between 9 : 1 and 11 : 1.

8. Process according to claims 6 and 7, characterised in that formed plastic beads are added to the constituents of the leight-weight concrete.